# EUROPEAN PATENT SPECIFICATION

(11) **EP 2 401 571 B1**
(45) Date of publication and mention of the grant of the patent: **11.07.2018**
(21) Application number: 10706792.8
(22) Date of filing: 26.02.2010
(51) Int. Cl.: F24H 1/30, F24H 9/14, C09J 5/00, F28F 3/04, F28D 9/00

(54) **HEAT EXCHANGER AND METHOD FOR MANUFACTURING SUCH**
WÄRMETAUSCHER UND HERSTELLUNGSVERFAHREN DAFÜR
ÉCHANGEUR DE CHALEUR ET SON PROCÉDÉ DE FABRICATION

(30) Priority: 26.02.2009 NL 2002567
(43) Date of publication of application: 04.01.2012
(73) Proprietor: Dejatech Holding B.V., 5951 DB Belfeld (NL)
(72) Inventor: DECKERS, Jan Hubertus, NL-5912 TW Venlo (NL)
(74) Representative: V.O.
(86) International application number: PCT/NL2010/050097
(87) International publication number: WO 2010/098666

(56) References cited:
- EP-A1- 0 889 292
- WO-A1-93/17290
- WO-A1-95/18947
- WO-A1-2009/021826
- BE-A3- 1 016 886
- DE-A1- 3 427 957
- NL-A- 9 002 201
- US-A- 3 914 199

## Description

The invention relates to a heat exchanger and a method for manufacturing such.

Heat exchangers are used in heating apparatus such as central heating heaters, boilers and the like. In such heat exchangers a burner is provided, fired by for example gas or oil. Heat generated by the flames extending from the burner is exchanged between heated gas and heat exchanging surface of the heat exchanger, from which it is in turn transferred to a fluidum provided in channels or spaces within the heat exchanger, such as water for central heating, air or water for household use. In such heat exchangers pressure is build up during use, at elevated temperatures. This provides for special requirements with respect to sealing of such heat exchangers.

Heat exchangers are known to be made by moulding technology. This is a relatively expensive method, especially because the moulds necessary for moulding the heat exchanger are relatively expensive to produce and maintain. If lost core technology is used this becomes even more explicit.

Heat exchangers are furthermore known to be made by using welding technology or mechanical machining for closure stops for assembling the heat exchanger from pipes, plates and the like. Such method is also relatively expensive, especially due to the assembling steps.

Another problem of these known methods for manufacturing heat exchangers is that for different capacities of the heat exchangers different moulds are necessary. This means that large investments are necessary for series of such heat exchangers, for the necessary tooling.

NL9002201 discloses a heat exchanger having a light metal, extruded, cylindrical core made in one piece. A cylindrical copper sleeve is then provided around the core. This sleeve has to be tightly fitting. Within the core two concentric areas are provided for forming a heated gas conducting area central within the core. Within the outer one of said two areas four water conducting channels are provided, closed to the sleeve. In an embodiment an upper part of the central part of the core is removed by machining, for forming a burner space, into which a cylindrical burner is inserted. During use heat is transferred from heated flue gasses from the burner contacting the core to water flowing through the channels.

Such known heat exchanger has the disadvantage that it is very difficult to provide the burner space by machining within the extruded core. Moreover, the effective surface for transmitting heat from the flue gasses to the water is relatively small. Furthermore, upon heating of the heat exchanger thermal and physical problems will occur due to differences in expansion of the core and the sleeve, as well as thermal strains within the core due to temperature differences between the flue gas areas and the water channels, which will lead to cracks such as micro cracks within the materials and leakage of the heat exchanger. Especially between the outside surface of the core and the inside surface of the sleeve a gap may occur during heating and/or cooling of the core and the sleeve, which is energy ineffective and may even be dangerous to public health, for example because of undesired fumes entering the surroundings of the heat exchanger and because of the possible accumulation of dirt such as sooth in between, which may also at a later stage be expelled into the surroundings. These problems are even further enhanced by the fact that such heat exchangers have to be able to withstand high pressures, such as up to or above about 4 bars, or even up to and above 10 bar, whereas for some testing that pressure may even be far higher.

A further disadvantage of a heat exchanger according to NL9002201 is that the sleeve has to be provided. This is in itself costly, due to the copper used, as well as cumbersome to fit tightly around the relatively long core. Moreover, an extrusion mould for a core of such heat exchanger is costly and necessitates high maintenance.

US5937571 discloses a high fin density heat sink, comprising two base elements bonded to each other by epoxy. Heat sinks are used for cooling elements connected to an outer surface thereof by providing an air flow through the finned space within the heat sink. This heat sink is therefore not a heat exchanger in the sense of the present application. In this known heat sink the outer surfaces are flat, whereas within the heat sink fins are provided, forming a large heat exchanging surface. In this heat sink there is no burner space or water conducting channel. The temperature of the heat sink overall shall be relatively low during use, especially well below 100°C, whereas pressures will also be low, close to or at atmospheric. The fins of these heat sinks are extruded and can then be machined in a cross direction, for forming openings in said fins, thus creating pin fins. This is done in order to break up boundary layers of air flowing past said fins, which will only occur at low air flow speed and pressure. The epoxy bonding will form an inflexible connection between the parts of the heat sink.

FR2915792 discloses a heat exchanger in which a central core is extruded, with open sides comprising water and flue gas channels. This core is then closed by side elements which can be soldered, welded, bonded or clipped to the core, closing off said channels. Moreover the front and back end of the core are closed. Again this heat exchanger does not disclose a burner chamber, and is intended for cooling flue gasses in a car exhaust system, especially in a exhaust gas recirculation system. Temperature and pressure in such recirculation system will be relatively low, especially below about 100°C and below about 2 - 4 bar (0,2 - 0,4 MPa). Again, this is not a heat exchanger of a type of the present invention.

DE 3427957 discloses a heat exchanger comprising two cast metal parts, interconnected for forming a heat exchanging space and a burner space. Water conducting channels parts are provided in the two parts.

WO 95/18947 discloses a heat exchanger for fluids, especially for automotive, comprising light metal extruded parts, bonded to each other. This heat exchanger is not provided with a burner space.

One aim of the present invention can be to provide relatively inexpensive heat exchangers for heating systems, comprising a burner for creating heated flue gasses in the heat exchanger and directly feeding these into a heating space of said heat exchanger. Another aim can be to provide a method for manufacturing such heat exchangers or parts thereof, which is relatively inexpensive, especially compared to known methods. A still other aim can be to provide a method for manufacturing series of such heat exchangers having different capacities. At least one of these aims can be achieved by a heat exchanger or a method according to the present invention. These aims are not mentioned in any relevant order or decisive for the present invention over the prior art.

In a first aspect a heat exchanger according to the present description can be defined by comprising at least a heat exchanger space, a burner space and a water conducting channel, the heat exchanger comprising at least two parts made at least partly by extrusion from light metal or light metal alloy, said at least two parts mutually engaging for forming part of the heat exchanging space and/or the water conducting channel, wherein each of said at least two parts comprising part of said heat exchanging space and/or said water conducting channel and wherein the burner space is formed in one of or between said at least two parts, wherein said at least two parts are connected by an elastic bonding agent, in particular an elastic glue, forming a bond and a seal, wherein at least the water conducting channel of the heat exchanger is pressure resistant, wherein the at least two parts and end parts are provided with bonding surfaces, wherein on at least one of said bonding surfaces to be mutually bonded spacer elements are provided, which spacer elements are dimensioned such that when the said bonding surfaces are bonded together, one of said bonding surfaces can rest against said spacer elements on the other of said two bonding surfaces, providing a space between said two bonding surfaces having a substantially constant thickness between said bonding surfaces for housing said elastic bonding agent in a layer of substantially even thickness.

In another aspect a method according to the present description can be defined by a method for manufacturing a heat exchanger or parts thereof, wherein at least two parts are extruded. The parts are subsequently elastically bonded to each other for forming a fluid space. If any part is extruded, between extruding and bonding the parts at least one of the parts is machined by removing at least part of heat exchanging surface enhancing elements integrally extruded in the parts, for forming at least part of a burner space and a part of a heat exchanging space.

A heat exchanger according to the present description shall be subjected to high temperature differences, e.g. from near or below 20 up to or well above 120°C, for example up to above 140 to 160°C, and high pressures and pressure differences, for example up to and above 4 bar, up to 10 bar or even higher, especially during use and testing, at the flue gas side and/or at the water side. Moreover the temperature distribution over the heat exchanger during use will be far from even. Therefore seals and connections of this type of heat exchanger will be strained far more than in for example heat sinks and car exhaust system heat exchangers without direct heating.

The present invention shall be further elucidated in the following description, with reference to the drawings, in which:
Fig. 1 shows a heat exchanger, schematically, in perspective view;
Fig. 2 in perspective view a part of a heat exchanger, shown generally from a first side;
Fig. 3 in perspective view a part of a heat exchanger, shown generally from an opposite side;
Fig. 4 a partly assembled heat exchanger from a first end;
Fig. 5 a first part of a heat exchanger in a side view;
Fig. 6 a second part of a heat exchanger in a side view;
Fig. 7 in perspective view a partly assembled heat exchanger from a second side;
Fig. 8 a heat exchanger of fig. 7, with a mounted end plate;
Fig. 9 a heat exchanger of fig. 7 and 8, from an opposite end;
Fig. 10 schematically a gas flow path of a heat exchanger according to the present disclosure;
Fig. 11 schematically a water flow path of a heat exchanger according to the present disclosure;
Fig. 12 in perspective view schematically and enlarged part of a heat exchanger part;
Fig. 13A and B in frontal and side view a part of a heat exchanger part, in further detail; and
Fig. 14A and B in side view connecting parts of a heat exchanger part, in further detail.

In this description different embodiments of heat exchangers and parts thereof, as well as heating circuits equipped therewith are disclosed and described by way of example only. In these embodiments the same or similar parts have the same or similar reference signs. Combinations of parts of the embodiments shown are also considered to have been disclosed herein. In this description a heat exchanger as to be understood as an exchanger for exchanging heat between heated flue gasses from a burner and water flowing through one or more water channels within said heat exchanger. A burner space is provided into which a burner can be inserted, such that said heated flue gasses are actively created, during use, within said heat exchanger. In an alternative the burner can be at least partly integrated in the heat exchanger, for example by extrusion, casting and/or machining. Such heat exchangers are especially, but not exclusively suitable in domestic and commercial heating systems such as boilers and central heating systems, such as for space heating and/or tap water heating systems.

In the following description extrusion, possibly combined with machining of extruded parts, shall be described as means for manufacturing parts of such heat exchanger.

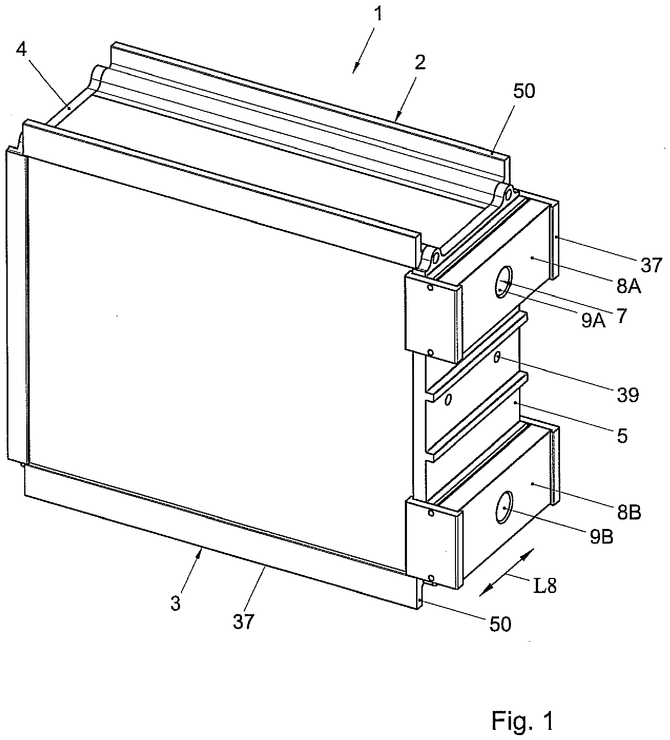

In fig. 1 schematically a heat exchanger 1 is shown, in perspective view, generally from a second side. This heat exchanger 1 comprises a first part 2, a second part 3, a first end part 4 and a second end part 5. In a heat exchanger 1 according to this description at least one of the first and second parts 2, 3 and/or the first and second end parts 4, 5 are made at least partly by extrusion. At least one of these parts 2, 3, 4, 5 is preferably made of light metal, such as aluminium, aluminium alloy, magnesium, magnesium alloy, or other metal. Preferably all parts 2, 3, 4, 5 are made at least partly by extrusion and at least partly of metal, preferably light metal.

In the embodiments shown at least two of the first 2 and second part 3 and the first 4 and second end part 5 are mutually bonded together for forming at least one of a gas flow space 6 and a water flow space 7. The gas space 6 and water flow space 7 can for example comprise one or more channels. In the embodiment of fig. 1 the second end part 5 comprises a first and second channel part 8A, 8B, both having a length direction Ls. The length directions L₈ are in this embodiment parallel, such that the end part 5 can be extruded in the length direction Ls. In each of the channel parts 8A, 8B an opening 9A, 9B is provided, for example by drilling. Screw treads can be provided in the openings 9A, 9B in order to connect piping to these openings, as will be discussed later on.

In this description bonding has to be understood as forming an adhesive connection between two or more parts using an elastic bonding agent. Especially suitable is a glue or adhesive which after curing is still flexible and elastically deformable. Preferably the bonding agent is heat resistant to temperatures above 120°C, preferably above 150°C, more preferably above 170°C. A glue can be used having a temperature resistance up to 180°C or above. A glue can be used having a use temperature range between about -4 and +120 °C, preferably between about -20 and +150 °C, more preferably between about -40 and + 170 °C, even more preferably between at least -55 and 180 °C or higher (e.g. PSI S406). A temperature range should be understood as a range of temperatures in which the glue maintains at least most of its elastic and bonding properties, such that in a heat exchanger at least the bonding maintains pressure resistant and fluid and gas tight. Pressure resistant is in this context to be understood as at least resistant to pressures in an adjoining space of above 2 bar, preferably above 4 bar, more preferably at least to 10 bar. The desired pressure resistance can be as high as 20 bar or above. One bar is 100.000 Pascal or 0.1 MPa. Reference can be made to adhesion to peel, according to ASTM C794.

Elastic bonding agent, such as glue or adhesive should be understood as an agent which, after curing, has during use, a high yield strength and high yield limit. This means it can be stretched to a relatively high degree before breaking. The elasticity is preferably such that the yield limit is more than about 300%, preferably more than about 400%, more preferably more than about 550% and in particular preferably about 650% or more. Preferably this high yield limit is maintained over the temperature range during use of the heat exchanger. The yield limit can e.g. be measured according to ASTM D412.

The bonding agent can be a silicone or elastomeric based adhesive, preferably curing at about room temperature to a rubber like component which is water and gas tight. A bonding layer formed by said bonding agent is preferably pressure resistant to at least about 4 Bar, more preferably to about 10 Bar and even more preferably to about 20 Bar or above, wherein the bonding agent is preferably applied to unprimed metal of the parts. An example of such bonding agent is Dow Corning 7091, which has a normal temperature range of use between -55 and +180°C, and a yield limit of about 680%.

All kinds of combinations can be contemplated of yield limit, pressure resistance and temperature range.

Dow Corning® 7091 Adhesive/Sealant is a high-performance, neutral-cure silicone that cures at room temperature to a tough, flexible rubber, suitable for the use described herein. Dow Corning 7091 remains flexible and stable from -55° to 180°C (-67° to 356° F), and is a one-component, non-sag sealant. It can have a tear strength of 86 ppi and a tensile strength of about 363 psi. This adhesive is only provided by way of example and should not be considered limiting the scope in any way.

By using such a flexible bonding agent parts of the heat exchanger can be connected to each other, forming fluid, especially water, and gas tight seals without having to add gaskets, seals or the like, which will remain fluid and gas tight over a large temperature range. Moreover, such seals are relatively inexpensive and are pressure resistant to relatively high pressures. Furthermore, due to the high flexibility, problems with different expansion rates and directions of the different parts bonded together are avoided.

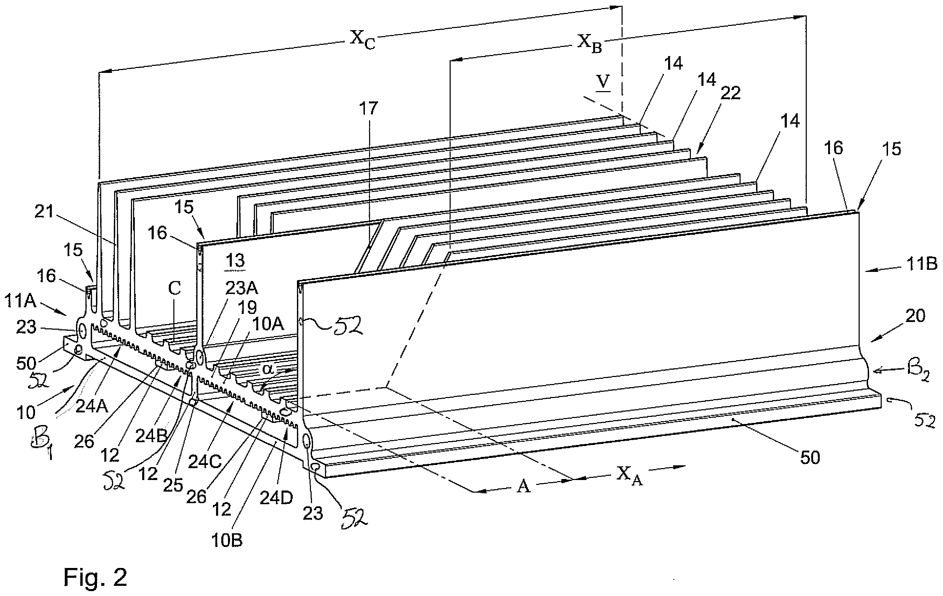

Fig. 2 shown in perspective view a first part 2. This part 2 is made substantially be extrusion. The part 2 shows a first wall 10 and two second walls 11A, B. The first wall 10 is a substantially hollow wall, defined by a first wall part 10A and a second wall part 10B, for example extending substantially parallel to each other, whereas a number of cross walls 12 extend between the first and second wall parts 10A, 10B. The second walls 11A, B extend at an angle α to the first wall 10. The angle α differs from 180 degrees. The angle α is for example between 45 and 135 degrees and is preferably about 90 degrees. The walls 11A, B extend in a first direction from the first wall 10. One or more of the second walls 11A can be lower than at least one other wall 11B of the second walls 11. On the first side of the first wall 10 an intermediate wall 13 extends, in the same direction as the second walls 11. Between each of the second walls 11A, B and the intermediate wall 13 a series of fins 14 is provided, extending in the same first direction from the first wall 10. The fins 14 can form heat exchanging surface increasing elements. As shown in fig. 2 the second walls 11, the intermediate wall 13, the cross walls 12 and the fins 14 all have a length direction X and thus extend substantially parallel to each other. The free ends 15 of the second walls 11 and the intermediate wall 13 can have a groove 16 extending in the said length direction X, open to a side facing away from the first wall 10.

As is shown in fig. 2 to the right side of the intermediate wall 13 the fins 14 can have a reclining end 17, such that the fins 14 have a greater length XA near the first wall 10 than the length XB at the opposite free side 15 thereof. The opposite end 18 of the fins can be straight, such that the second ends 18 of the fins 14 form a substantially flat plane V extending substantially perpendicular to the first wall 10, for example at a distance B from the opposite edge 20. These fins 14 can end at a distance A from the edge 19 of the first wall 10. The intermediate wall 13 extends from the edge 19 to a distance B from the opposite edge 20 of the first wall 10. The reclining ends 17 can in an alternative also be e.g. convex or concave. The space created thereby can be narrowing in the direction of the edge 20. Obviously the reclining ends can also be substantially or partly convex of concave or have another regular or irregular shape, providing said effect of a narrowing burner chamber 30

As is shown in fig. 2 to the left side of the intermediate wall 13 the fins 14 can have a straight end 21, such that the fins 14 have about the same length XC near the first wall 10 as at the opposite free side 15 thereof. The opposite end 22 of the fins can be straight, such that the second ends 22 of the fins 14 abut the same substantially flat plane V extending substantially perpendicular to the first wall 10. Some of the fins 14, positioned next to the intermediate wall 13 can end at a distance C from the edge 19 of the first wall 10. The further fins 14 can extend the full length X of the first wall 10.

At two opposite outer sides of the second walls 11A, B a profile 23 is provided, having a substantially circular inner cross section. At the base of the intermediate wall 13 a further opening 23A can be provided, extending all the way through the relevant part 2, 3.

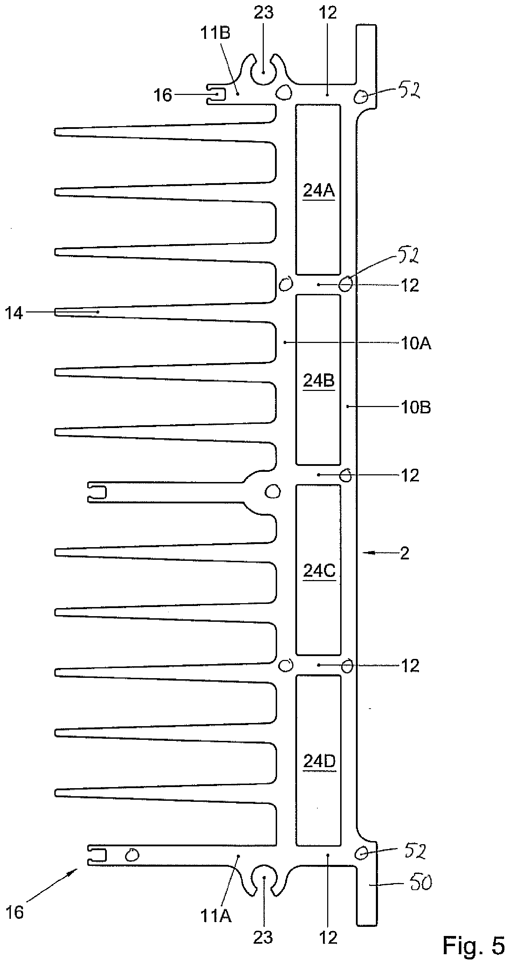

This first part 2 can be made by extruding a continuous length of profile having a cross section as for example shown in fig. 5. A desired length X₁ can be sawn off from the continuous length. Then part of the first ends 17 of the fins 14 can be removed, for example milled or sawn off, as can the second end of the intermediate wall 13. Because of the open side of the parts this is easily accessible for such machining. In the embodiment shown five cross walls 12 are shown, dividing the space 24 within the double first wall 10 into four parallel channel parts 24A, 24B, 24C, 24D. Different numbers of channels can be used. The two middle channel parts 24B, C are connected to each other by removing part of the first end 25 of the cross wall 12 in between, whereas the left hand two channel parts 24A, 24B in fig. 2 are connected to each other by removing part of the second end 26 of the intermediate cross wall 12, adjacent the plane V. In a similar manner part of the second end 26 of the cross wall 12 between the right hand two channel parts 24C, 24D can be removed to connect these two channel parts 24C, 24D. The channel parts 24 can thus form part of a water conducting channel 6.

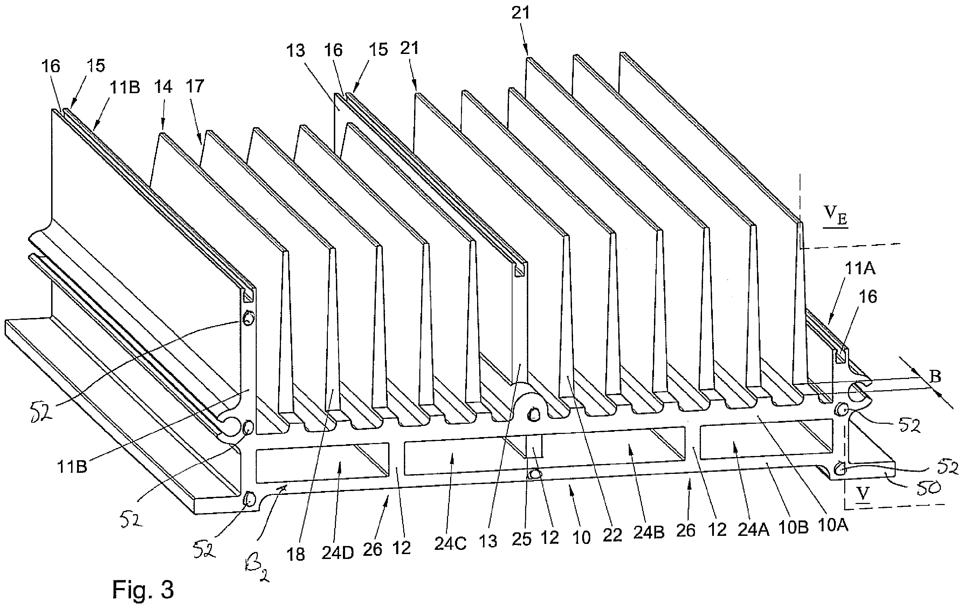

Fig 3 shows the first part 2 as shown in fig. 2, from the opposite second side. Here clearly the second ends of the fins 14 and the second walls 11 and intermediate wall 13 can be clearly seen, forming a plane Ve, parallel to the plane V. Planes V and Ve are imaginary planes.

Between the fins 14 and between the walls 11, 13 and adjacent fins 14 spaces are provided, such that a substantially regular pattern can be formed. The second part 3 can be formed in a similar way.

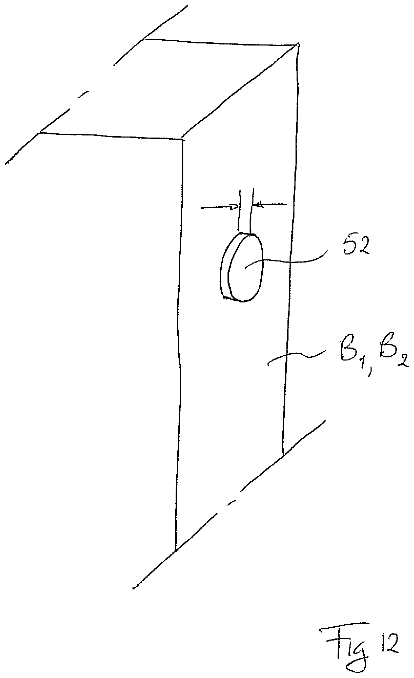

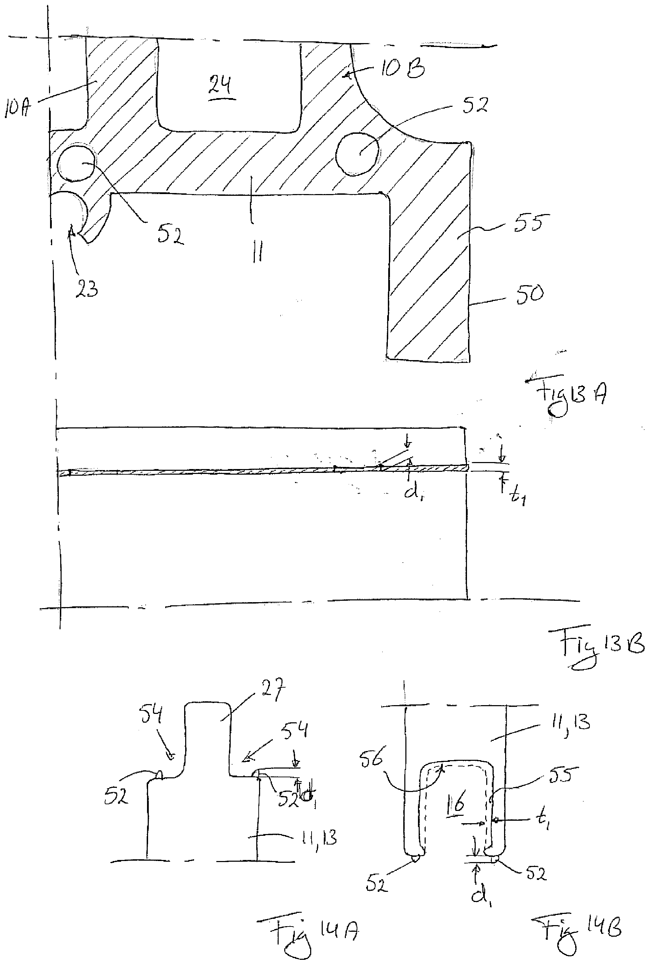

In embodiments at the free ends of the walls 10 and 11, at opposite ends seen in the length direction Xc, bonding surfaces B₁ and B₂ respectively can be formed. These bonding surfaces are preferably flat and even. As is schematically shown in e.g. fig. 3 - 7 and further and in larger detail shown in fig. 12 and 13, these bonding surfaces are provided with spacer elements 52. These spacer elements 52 can be integral part of the parts 2 and/or 3 and/or of end parts 4 and/or 5. The spacer elements can be small elevations above the bonding surfaces B, which can be provided by machining of said surfaces B, for example milling. In another embodiment these spacer elements 52 can be provided in or on the surface separately and e.g. be glued or screwed in place. The spacer element extent to a relatively short distance d₁ above said bonding surface B, for defining a thickness t₁ of the bonding layer 53, as is shown in fig. 13B. In fig. 12 a perspective view of a part of a first or second part 2, 3 or of an end part 4, 5 is shown, in enlarged view, showing a substantially cylindrical spacer element 52. Obviously these spacer elements 52 can have any desired shape or form, and a height d₁ depending on the desired, optimal thickness t₁.

In fig. 14A shows in side view a ridge 27 on a wall 11, 13 of a second part, by way of example only, whereas to the side of said ridge 27 shoulders 54 are formed, as part of the wall 11, 13 having a larger width than the ridge 27. On each shoulder, or on only one if desired, at least one spacer element 52 is provided, again having a relatively low height d₁ above the surface of the shoulder 54. This can for example be a ridge extending over a length of said wall 11, 13, or one or more shorter elements, such as for example pins, ribs or the like. In fig. 14B such spacer elements 52 are shown on the end surface of the wall 11, to the sides of the groove 16. Again the height d₁ is relatively small. Similar elements can be provided on top of the ridge 27, to the sides thereof and/or at the bottom 56 of the groove 16. In fig. 14B the bonding layer 55 is sketched in by phantom lines, as an indication. Preferably the space between the ridge 27 and the inner wall of the groove 16 has a width t₁ similar to the height d₁ of the spacer elements 52. The

The spacer elements 52 have the advantage that they define the minimum space between two opposite bonding surfaces B of for example the first and second parts 2, 3 and/or the end parts 4, 5, thus defining the thickness t of the layer of bonding agent, and more specifically defining an even thickness thereof over the entire relevant surface B, or between the ridge 27 and the groove 16 cooperating therewith. This means that the optimal amount of glue can be used, reducing costs, whereas the best bonding and sealing can be obtained easily with the relevant bonding agent. This is obtained by at least one bonding surface B abutting the spacer elements 52 on the at least one other bonding surface it is to be bonded with, preventing it from being pressed closer to said bonding surface. The height of the spacer elements 52 above the relevant bonding surface B can be in the order of tenth's of millimetres or less, e.g. between 0.01 and 1.5 mm, preferably less than 1 mm. Obviously the height and thus the thickness of the layer can be chosen dependent on the characteristics of the bonding agent used, for optimisation. By minimizing the thickness of the layer of bonding agent 55, the transfer of heat between the parts bonded together will be maintained. Moreover, due to the fact that one of the parts will be in direct contact with the or each other part it is bonded to by the abutting contact between the bonding surface of one of said parts with spacer elements on another bonding surface it is bonded too, there will be direct metal to metal transfer of heat, which will further optimize the heat transfer.

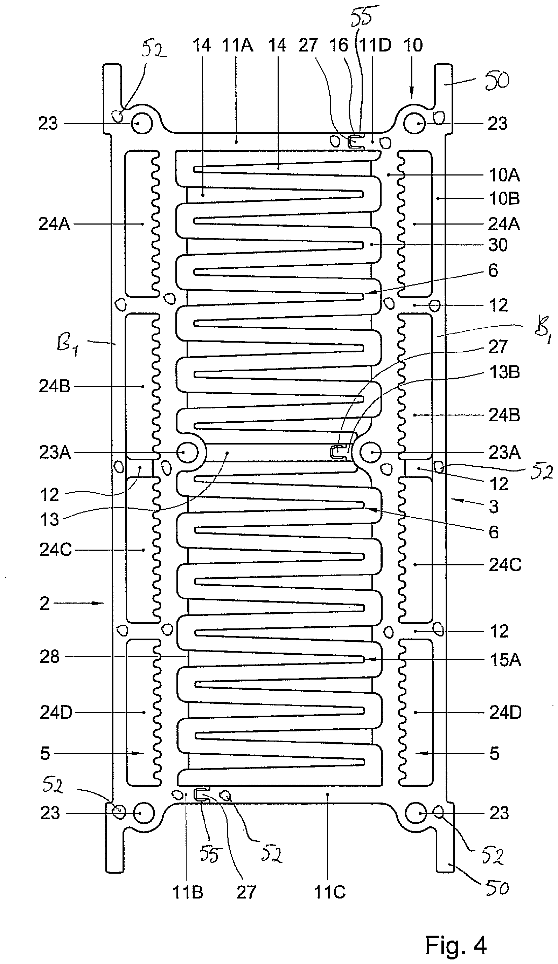

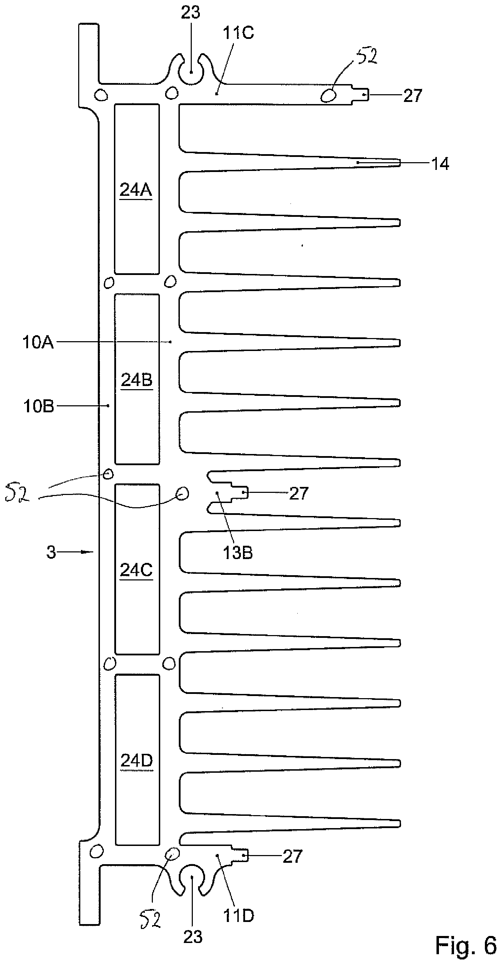

In fig. 4 a partly assembled heat exchanger 1 is shown, in side view, in which at least a first 2 and second part 3 are shown, assembled. In fig. 5 and 6 respectively the first part 2 and the second part 3 are shown, equally in side view. As can be seen the second part 3 has a cross section similar to that of the first part, but the second walls 11C, 11D and the intermediate wall 13B have heights such that when positioned on the second walls 11A, 11B and 13 respectively, the first wall 10 of the first part 2 extends parallel to the first part 10 of the second part 3, thus forming a substantially rectangular cross section. The second walls 11C, 11B and the intermediate wall 13 of the second part 3 have ridges 27 that can fit in the grooves 16. The fins 14 of the first part 2 can extend between the fins 14 of the second part and/or between a fin and either a second wall 11C, D or the intermediate wall 13 of the second part. The fins 14 can have a substantially triangular or trapezoid cross section with a base 28 near the respective first wall 10 broader than the free side thereof.

As can be seen the channel parts 24 of the first walls 10 can have a ribbed or otherwise corrugated or channelled surface, at least at the side of the fins 14, in order to increase the heat exchanging surface of the channel parts 24. Heat of the fins can be transferred to water in the channel parts 24 through the first wall 10. The heat exchanging surface increasing profile of the channel parts 24 will increase the effectiveness of this heat exchanging when water is transferred through the channel parts 24.

The first part 2 is bonded to the second part 3, by bonding the second walls 11A, B of the first part 2 to the second walls 11C, D of the second parts 3. The intermediate wall 13 of the first part 2 can also be bonded to the intermediate wall 13 of the second part 3. Preferably at least the ridges 27 can be bonded in the grooves 16. Bonding can be achieved by glue, for example acrylic glue, two or more component glue, PLEXUS MA 420, PERMABOND ES 550 or DOW CORNING 7091. As can be seen in fig. 4 preferably the grooves can have an open side having a width slightly less than the adjacent part of the groove 16, whereas the ridge 27 can have a width substantially similar to the width of the open side. This means that glue in the groove 16 will be locked in the groove by forcing the ridge 27 into the groove 16, whereas the ridge 27 will be centred within the groove 16, when the opening is provided symmetrically. The space between the ridge 27 and the walls of the groove 16 is preferably similar in width to the height of the spacer elements 52, such that a layer of bonding agent can be formed between said ridge 27 and groove 16 similar in thickness as that between the bonding surfaces as discussed before.

When an embodiment of a ridge 27 and/or groove 16 is used as disclosed in fig. 14A and B, spacer elements 52 can again be used for defining the thickness of a layer of bonding agent.

As can be seen in the various figures, the spacer elements 52 can be distributed over all or some of the bonding surfaces B and/or end parts 4, 5. Preferably they can at least be provided on first walls 10 near partition walls 12 and near walls 11 and 13, as well as on the walls 11 and 13. Moreover they can be provided for example at feet 50. Preferably they are distributed such that pressure applied to the parts and, especially, the en parts 4, 5 does not significantly bend or otherwise deform any surface in between the spacer elements 52. The spacer elements 52 are preferably provided at a short distance from a or, more preferably, at a distance from each of the sides of the relevant bonding surface they are provided on. This has the advantage that the bonding agent can surround the spacer element 52 at least partly within the layer of bonding material, or at least form a continuous seal between the bonding surfaces B alongside the spacer elements, and preferably can surround the spacer elements 52 entirely, for forming both a good adhesion between the bonded parts and a good sealing. Again, the direct contact between the metal parts through the spacer elements will improve the heat transfer between parts. The relatively small thickness of the bonding layer 55 will furthermore prevent thermal isolation further. Moreover this prevents too flexible seals.

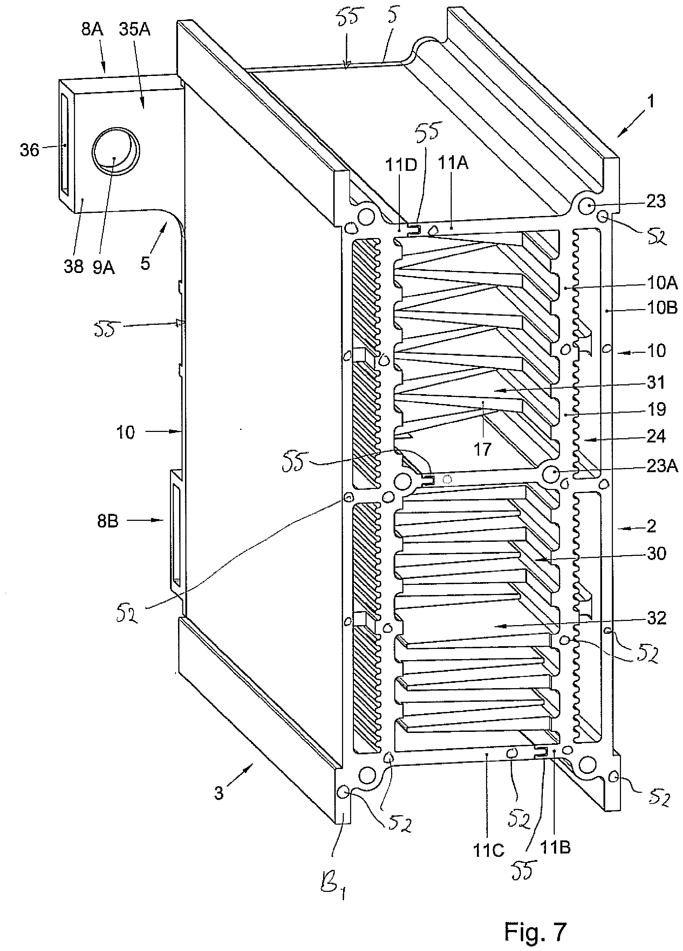

Fig. 7 shows a partly assembled heat exchanger 1, open at the first side, showing the second walls 11A, C and 11B, D bonded to each other, as well as the intermediate walls 13. Between the first walls 10 and the second walls 11 of the first and second parts 2, 3 a heat exchanging space 30 is defined, at least partly. At two opposite sides of the space 30 in the respective first wall 10 a channel 24 is provided for e.g. water. A second end part 5 is partly visible at the second side of the heat exchanger 1. At the first side the fins 14 are visible. At one side of the intermediate walls 13 the reclining ends 17 of the fins 14 are shown. Between the edge 19 and the ends 17 of the fins 14 a burner space 31 is provided. In the burner space 31 a burner can extend at least partly or, when a burner is used which is provided outside said space 31, then flames can extend into the space. The reclining ends 17 are provided to prevent undesired tension in the fins 17. At the opposite side of the intermediate walls 13 a space 32 can be provided, in order to reduce flow resistance and improve the heat exchange between heated gas flowing through the space 30 between the fins 14 and/or the fins and the walls 11, 13.

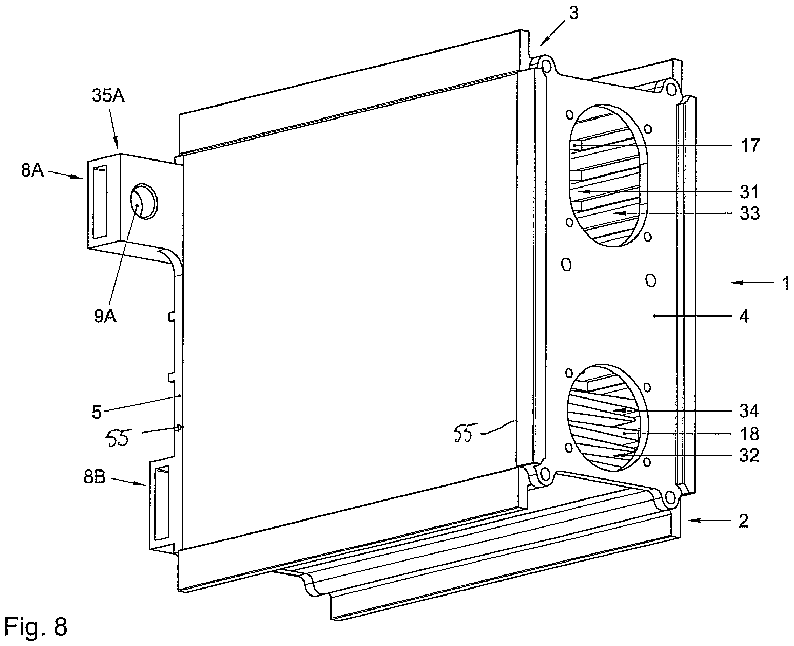

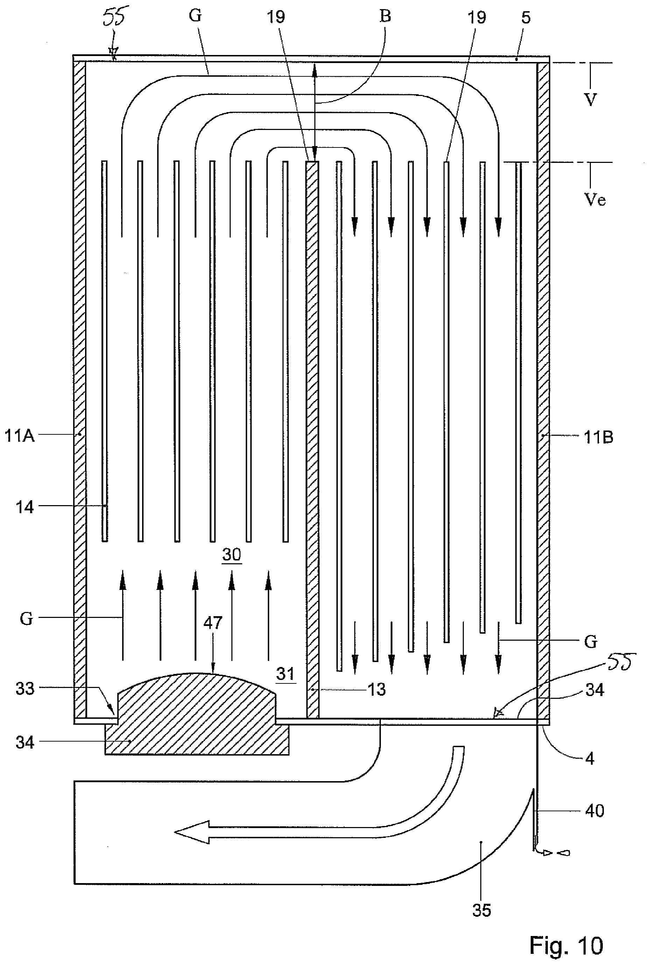

In fig. 8 a heat exchanger 1 is shown, similarly to fig. 7, but with a first end part 4 at the first side of the heat exchanger 1. The first end part 4 can be bonded, such as glued to the first and second parts 2, 3. Similarly the second end part 5 can be bonded, such as glued to the second side of the heat exchanger 1. Again spacer elements 52 can be used for defining the optimal or at least desired thickness of the layer of bonding agent. In the first end part 5 a first opening 33 is provided, opening into the burner space 31. A second opening 34 is provided, opening into the space 32. In and/or over the first opening 33 a burner 34 can be positioned, as is shown in fig. 10. In and/or over the second opening a gas exhaust 35 can be connected, as is shown in fig. 10.

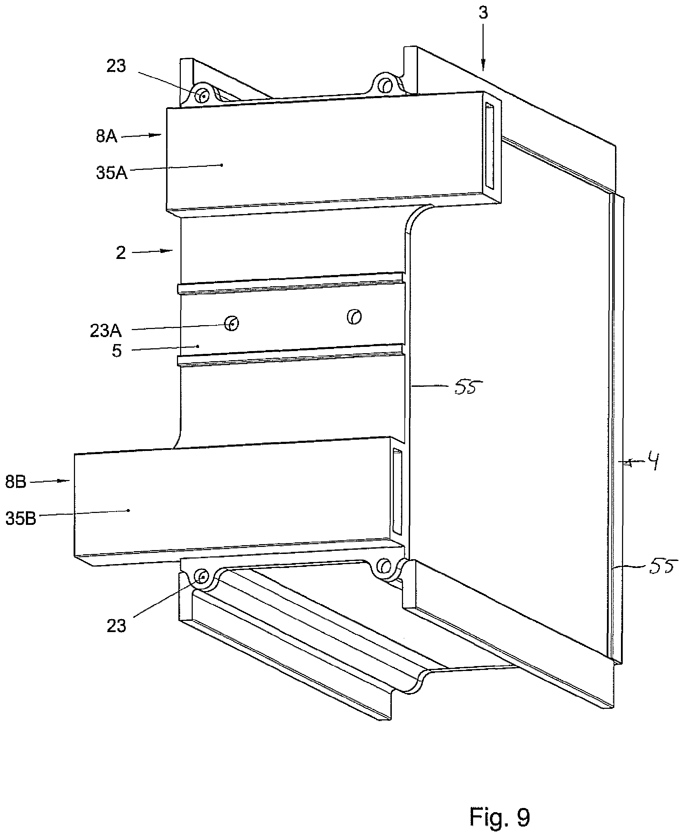

As can be seen in fig. 8 and 9 in an embodiment the channels 8A, B can extend beyond the periphery of the first and second parts 2, 3. In the embodiment of fig. 8 and 9 the channels parts 8A, b extend in opposite directions beyond the periphery. In each of the extending portions 35A, 35B an opening 9 is provided, for example by drilling or milling, preferably provided with internal screw threads or another means for attaching a pipe of a heating circuit. An inlet of a heating circuit can be connected to one of the opening s 9, an outlet of the heating circuit to the other opening 9. The openings 9 are preferably provided in a wall 38 of the channels facing in the direction of the first and second part 2, 3 of the heat exchanger 1. This can provide a compact heat exchanger and easy access. The open ends 36 of the channels parts 8A, B can be closed off by stops 37, as is shown in fig. 1. The stops can also be bonded such as glued. In the wall 38 of each of the channel parts 8A, B at least one further opening 51 is provided, opening into a channel part 24 inside a first wall 10, for fluidly connecting the channel part 24 with the channel part 8 and thus with the relevant opening 9. In the embodiments of fig. 1 and 8 one channel part 8A is connected to a first channel part 24A of each of the first walls 10, whereas the other channel part 8B is connected to the last channel part 24D of the first wall. In the embodiments shown this is the fourth channel part 24D but obviously other numbers of channel parts can be provided, whereas the channel parts 8A, B or further such channel parts 8 can be connected to other channel parts 24 or even to each of the channel parts 24, depending on the desired flow paths of the water through the walls 10.

The first and/or second end parts 4, 5 can basically be made by extrusion, the extrusion direction in the length direction Ls of the channel parts 8A, B. For an embodiment of for example fig. 8 and 9 parts of the wall 38 can be removed, for example by milling or sawing, to provide for the extending portions 35A, B. Openings 9 can be provided then by for example drilling or milling. The end parts can be bonded, such as glued, to the first and second parts 2, 3. The end parts 4, 5 can be provided with further openings 39. When assembling the heat exchanger bolts or rod with ends provided with screw threads can be inserted through these openings 39 and the channels 23 or openings 23A extending there behind, after which nuts can be screwed onto the bolts or screw thread of the rods, in order to further clamp the end parts 4, 5 to the first and second parts 2, 3. This can provide for further mechanical strength.

In fig. 10 schematically a gas flow path is shown, thorough the inner space 30 of a heat exchanger 1, between the burner 34 and the exhaust 35. As can be seen gas, heated by the burner 34 can flow, as indicated by arrows G from the burner space 31 in which part of the burner 34 extends and during use flames are provided by the burner 34, into the spaces between the fins 14 and/or fins and adjacent walls 11, 13. At the second side opposite the burner 34 the gas can flow between the end part 5 and the end 19 of the intermediate wall 13, in to the spaces between the fins 14 in the space between the second end part 5 and the exhaust 35. From there the gasses can flow into the exhaust 35 to be expelled. A condensate drain 40 can be provided in or next to the exhaust 35.

As can be seen in fig. 10 in this embodiment the length of the fins 14 in the space between the second end part 5 and the exhaust can vary, such that the fins closest to the intermediate wall 13 are longer then fins closer to the second wall 11B and the space 32 has a substantially trapezoid shape. This has the advantage that all gasses flowing through the space 30 have about the same contact with fins, independent of their flow path.

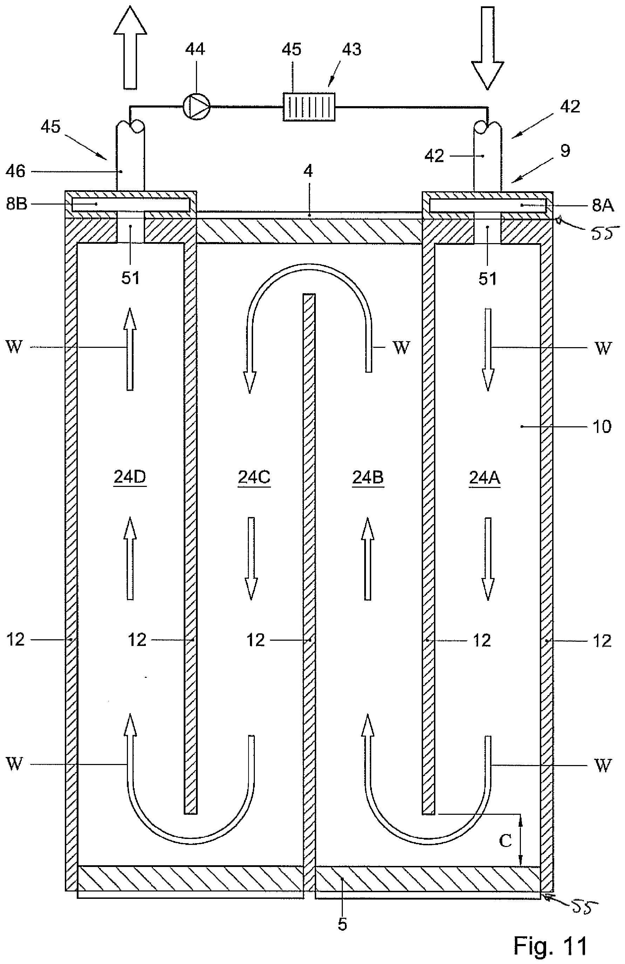

In fig. 11 schematically a water flow path is shown through the first walls 10 and the channel parts 8A, B. In this embodiment water is provided to the heat exchanger 1 through an inlet 41 into the channel part 8A. The inlet 41 is shown as a pipe 42 extending from a heating circuit 43, schematically shown in fig. 11 as having a pump 44 and a radiator 45, and connected to the relevant opening 9. In other embodiments this can for example be a household water or sanitary water supply, a boiler, or other means using heated water or other heated fluids or gasses. The water flowing from the inlet 41 flows into the channel part 8A and is divided over both channels 24 in the respective first and second part 2, 3. In fig. 11 only one of these channels 24 is shown. The water then flows through the channel parts 24 A - D, along the cross walls 12, to the other 8B of the two channel parts 8 as is shown by arrows W, through which the water from both channels 24 can flow into an outlet 45, here shown as a pipe 46 connected to the heating circuit 43.Thus heat can be exchanged between the gasses flowing through the space 30 and the fins and walls, especially walls 13 and 10, which heat can then be transferred to water or other medium flowing through the channels 24, to be used in the heating circuit 43. The flow through the channels 24 and the space 30 if preferably such that water and gas have counter flow directions as much as possible. This can for example be obtained by positioning the inlet 41 in the second end part 5 at the exhaust 35 side of the intermediate wall 13, the outlet 45 being provided on the opposite side of the intermediate wall 13, in the second end part 5.

As will be understood the bonding agent such as glue used for bonding different parts of the heat exchanger 1 to each other preferably provides a sealing between these parts too, which provides for a water and gas tight connection without the necessity of further sealing means such as seals. In other embodiments sealing of at least some of the parts relative to each other can be obtained through other means, such as seals, gaskets or the like sealing means. By using an elastic bonding agent for connecting and sealing parts of the heat exchanger, the surprising advantage is obtained of lower cost, and better sealing than when a hard or hardening agent is used. Moreover, due to the bonding, especially in combination with spacer elements, the connection can be made strong and gas and fluid tight, as well as pressure resistant.

A heat exchanger 1 according to the present invention is relatively easy to produce, is economical in comparison to heat exchangers having the same capacity made by for example moulding or welding, and can easily be adapted for for example different capacities, set up such as amendment of the position of the inlet and/or outlet 41, 45, the burner 34 and the layout of the channels 24 and fins 14. Moreover, a range of heat exchangers 1 can be provided, differing basically only in the length X₁ of the first and second part 2, 3. These different heat exchangers will have different capacities, depending on and mainly in relation to the length X₁. This means that with the same extrusion tools different heat exchangers can be made, reducing production costs.

The first and/or second part 2, 3 can be provided with flanges 50 for supporting the heat exchanger.

In preferred embodiments the burner 34 can be a burner having a burner deck 47 made using fiber technology. An example of such material is a material referred to as nit in the relevant fields, for example as used and supplied Bekaert Combustion Technology BV, Assen, The Netherlands. A burner range available using such technology is known as Furinit® or Aconit®, trademarks used by Bekaert Combustion Technology BV, Assen, The Netherlands. These burners 34 preferably are premix burners, and can be modulating burners. The fibers can be metal or ceramics or combinations thereof. A burner 34 for use in the present description can be for example a burner having a cylindrical burner deck, a flat or curved burner deck or a dome shaped burner deck, or any other suitable shape an dimensions suitable for the relevant heat exchanger. Burners using fiber technology for the burner deck have at least the advantage that they are compact and still have a relatively large burning surface area, due to the fibers. The burners can be modulated over a very large range, for example but not limited to between 1 and 80 kW/dm² or 1 - 22 kW/dm². The heat exchanger can be very compact, in relation to the capacity, which renders the use of a compact burner advantageous.

A heat exchanger 1 according to this description can be used as a "stand alone" heat exchanger, for supplying heated medium such as water. In another embodiment the heat exchanger can be used as a "add on" heat exchanger, for example coupled to other heating or power generating means, such as heating devices using "green" energy, electrics, natural gas or the like. Also a number of these heat exchangers can be connected, such that depending on heat demand one or more of these heat exchangers can be fired up to provide heat.

The invention is by no means limited to the embodiments as shown and/or described in this description. Many variations thereof are possible within the scope of the claims, including at least all combinations of parts and elements of the embodiments and parts thereof shown, in any combination or permutation. For example one or both of the walls 10 can be made having separate channel parts above or next to each other for connecting to separate water or other medium circuits. Moreover the first and/or second parts can have other cross sections and can for example have reclining second walls, for providing a larger space 30. The parts can be attached to each other using additional means, such as screws, fasteners, clamps, welds or the like. Also other bonding agents can be used, for example two or more component agents. Moreover, the even thickness of the bonding layers and heat conducting properties through the connection thus formed can be achieved in another way, for example by gluing tools and moulds used for exact positioning of the parts during bonding, and/or by providing heat conducting elements connected to both parts, such as but not limited to pins, strips or similar, preferably metal elements inserted in between the bonded parts or to them, crossing said bonding connection. In other embodiments a first part 2 can be used having second walls 11 and intermediate walls 13 extending from both sides of the first wall 10, as well as fins 14, whereas two second parts 3 can be provided at the two opposite sides of the first part 2, providing a space 30 to each side of the first wall 10 of the first part 2. These spaces 30 and the water channels 24 of the different parts 2, 3 can be used for the same or different heating circuits. Such heat exchanger can be equipped with one or two burners 34. Shapes and dimensions, as well as positions of the different parts can be changed within the scope of the claims as pending. Moreover, more or less channel parts 8, 24 can be provided than shown, whereas more than one intermediate wall can be provided, for example two or more, in each of the first and second parts 2, 3, whereas the channel parts, burner and exhaust can be provided in different positions. For example, the burner can be positioned on and/or in the first end part 4, the exhaust in and/or on the second end part 5 when the number of intermediate walls is even, having an even number of direction changes of the gas flow in the space 30. These and other alterations and modifications are supposed to be disclosed within the scope of the claims.

## Claims

1. Heat exchanger (1) comprising at least a heat exchanger space (30), a burner space (31) and a water conducting channel (24), wherein the heat exchanger (1) comprises at least two parts (2, 3) made at least partly by extrusion from light metal or light metal alloy, said at least two parts (2, 3) mutually engaging for forming part of the heat exchanging space (30) and/or the water conducting channel (24), wherein each of said at least two parts (2, 3) comprises part of said heat exchanging space (30) and/or said water conducting channel (24) and wherein the burner space (31) is formed in one of or between said at least two parts (2, 3), wherein said at least two parts (2, 3) are connected by an elastic bonding agent (55), in particular an elastic glue, forming a bond and a seal, wherein at least the water conducting channel (24) of the heat exchanger (1) is pressure resistant, said heat exchanger further comprises at least a first end part (4) and a second end part (5), wherein the at least two parts (2, 3) and end parts (4, 5) are provided with bonding surfaces B, wherein on at least one of said bonding surfaces (B) to be mutually bonded spacer elements (52) are provided, which spacer elements (52) are dimensioned such that when the said bonding surfaces (B) are bonded together, one of said bonding surfaces (B) can rest against said spacer elements (52) on the other of said two bonding surfaces (B), providing a space between said two bonding surfaces (B) having a substantially constant thickness (t) between said bonding surfaces (B) for housing said elastic bonding agent (55) in a layer of substantially even thickness.

2. Heat exchanger according to claim 1, wherein the spacer elements (52) are preferably integrally made and/or fixedly connected with said part (2, 3) or end part (4, 5).

3. Heat exchanger according to claim 1 or 2, wherein said bonding agent (55) surrounds at least a number of said spacer elements (52) at least partly.

4. Heat exchanger according to any one of claims 1 - 3, wherein at least one of the two parts (2, 3) has a first wall (10) and two second walls (11), the second walls (11) extending under an angle different from 180 degrees, from the same side of the first wall (10), the two parts (2, 3) connected by the bonding agent (55) by at least the second walls (11).

5. Heat exchanger according to claim 4, wherein a series of heat exchanging surface enhancing elements (14) extend from the first wall (10), wherein the elements (14) are preferably ribs having a length direction substantially parallel to a length direction (X) of the second walls (11).

6. Heat exchanger according to claim 5, wherein at least a part (2, 3) provided with said heat exchanging surface enhancing elements (14) is made at least partly by extrusion and wherein part of the heat exchanging surface enhancing elements (14) has been removed from the relevant part (2, 3) after extrusion thereof.

7. Heat exchanger according to any one of the previous claims, wherein two end parts (4, 5) are mounted to the two parts (2, 3), at opposite sides thereof, wherein the end parts (4, 5) are preferably bonded to the said two parts by elastic bonding agent (55), preferably an elastic glue, at least partly closing off at least the heat exchanging space (30) and/or the water channel (24), and/or wherein said end parts (4, 5) are preferably made at least partly by extrusion.

8. Heat exchanger according to any one of claims 1 - 7, wherein the bonding agent (55) is an elastic glue having a use temperature range between about -4 and +120 °C, preferably between about -20 and +150 °C, more preferably between about -40 and + 170 °C, even more preferably between at least -55 and 180 °C or higher, and/or wherein the elasticity is preferably such that the yield limit is more than about 300%, preferably more than about 400%, more preferably more than about 550% and in particular preferably more than 650%.

9. Heat exchanger according to any one of the previous claims, wherein the bonding agent (55) is a silicone or elastomeric based adhesive, preferably curing at about room temperature to a rubber like component which is water and gas tight, wherein a bonding layer formed by said bonding agent is preferably pressure resistant to at least about 4 Bar, more preferably to about 10 Bar and even more preferably to about 20 Bar or above, wherein the bonding agent is preferably applied to un-primed metal of the parts.

10. Heat exchanger according to any one of the previous claims, wherein the burner space (31)is at least to one side, preferably at a side connecting it to the heat exchanging space (30) comprising heat exchanging surface enhancing elements (14), provided with at least one sloping, convex or concave surface or a series of such surfaces (17), narrowing said burner space (31) at said side.

11. Heat exchanger according to any one of the previous claims, wherein the two parts (2, 3) have a similar and preferably substantially identical cross section, perpendicular to a length direction (X).

12. Series of heat exchangers, each according to any one of the previous claims, wherein at least two heat exchangers (1) in the series are substantially identical, except for a length direction (X).

13. Method for manufacturing a heat exchanger or parts thereof, wherein at least two parts (2, 3) are extruded, which parts are subsequently bonded to each other using an elastic bonding agent (55) or adhesive for forming at least a heat exchanging space (30) and/or a water conducting channel (24) and a burner space (31), said bonding agent (55) or adhesive forming a water and gas tight sealing, wherein between extruding and bonding the parts at least one of the parts (2, 3) is machined by removing at least part of heat exchanging surface enhancing elements (14) integrally extruded in the parts, for forming at least part of said burner space and said heat exchanging space (30).

14. Method according to claim 13, wherein the parts are glued to each other, the glue forming a fluidum tight seal.

15. Method according to claims 13 or 14, wherein two end parts (4, 5) are manufactured at least partly by extrusion and are secured to the two parts (2, 3), preferably by an elastic bonding agent (55), thereby closing a fluid space at least partly.

16. Method according to any one of claims 13 - 15, wherein said two parts (2, 3) and/or end parts (4, 5) are provided with at least one bonding surface (B) each, for being bonded together and/or to end parts, (4, 5) wherein at least one of said bonding surfaces (B) is provided with spacer elements (52), said spacer elements (52) having a substantially even height above said bonding surface (B), wherein a bonding agent (55) is provided on at least one of said bonding surfaces (B), at least around said spacer elements (52), such that when the bonding surfaces (B) are bonded together, one of said bonding surfaces (B) is forced against said spacer elements (52) on the other of said bonding surfaces (B), thereby forming a layer of bonding agent (55) between said two binding surfaces (B) having a substantially even thickness (t), wherein the layer preferably surrounds the spacer elements at least substantially.

17. Heating apparatus comprising a heat exchanger according to any one of claims 1 - 11 or made with a method according to one of claims 13 - 16.

## Patentansprüche

1. Wärmetauscher (1), umfassend mindestens einen Wärmetauscherraum (30), einen Brennerraum (31) und einen Wasser führenden Kanal (24), wobei der Wärmetauscher (1) mindestens zwei Teile (2, 3) umfasst, hergestellt mindestens teilweise durch Extrusion aus Leichtmetall oder Leichtmetalllegierung, die mindestens zwei Teile (2, 3) ineinandergreifend zum Bilden eines Teils des Wärme tauschenden Raums (30) und/oder des Wasser führenden Kanals (24), wobei jedes der mindestens zwei Teile (2, 3) einen Teil des Wärme tauschenden Raums (30) und/oder des Wasser führenden Kanals (24) umfasst und wobei der Brennerraum (31) in einem von oder zwischen den mindestens zwei Teilen (2, 3) gebildet ist, wobei die mindestens zwei Teile (2, 3) durch ein elastisches Bindemittel (55) gebunden sind, insbesondere einen elastischen Kleber, der eine Bindung und eine Dichtung bildet, wobei mindestens der Wasser führende Kanal (24) des Wärmetauschers (1) druckbeständig ist, der Wärmetauscher ferner umfassend mindestens ein erstes Endteil (4) und ein zweites Endteil (5), wobei die mindestens zwei Teile (2, 3) und Endteile (4, 5) mit Bindeoberflächen B versehen sind, wobei auf mindestens einer der miteinander zu bindenden Bindeoberflächen (B) Abstandselemente (52) bereitgestellt sind, welche Abstandselemente (52) so dimensioniert sind, dass, wenn die Bindeoberflächen (B) zusammengebunden sind, eine der Bindeoberflächen (B) gegen die Abstandselemente (52) auf der anderen der zwei Bindeoberflächen (B) ruhen kann, um einen Raum zwischen den zwei Bindeoberflächen (B) mit einer im Wesentlichen konstanten Dicke (t) zwischen den Bindeoberflächen (B) bereitzustellen, um das elastische Bindemittel (55) in einer Schicht von im Wesentlichen gleichen Dicke aufzunehmen.

2. Wärmetauscher nach Anspruch 1, wobei die Abstandselemente (52) bevorzugt integral hergestellt und/oder fest mit dem Teil (2, 3) oder Endteil (4, 5) verbunden sind.

3. Wärmetauscher nach Anspruch 1 oder 2, wobei das Bindemittel (55) mindestens eine Anzahl der Abstandselemente (52) mindestens teilweise umgibt.

4. Wärmetauscher nach einem der Ansprüche 1-3, wobei mindestens eines der zwei Teile (2, 3) eine erste Wand (10) und zwei zweite Wände (11) hat, die zweiten Wände (11) verlaufend in einem Winkel, anders als 180 Grad von derselben Seite der ersten Wand (10), die zwei Teile (2, 3) verbunden durch das Bindemittel (55) durch mindestens die zweiten Wände (11).

5. Wärmetauscher nach Anspruch 4, wobei eine Reihe von die Wärme tauschende Oberfläche verbessernden Elementen (14) von der ersten Wand (10) verlaufen, wobei die Elemente (14) bevorzugt Rippen mit einer Längsrichtung im Wesentlichen parallel zu einer Längsrichtung (X) der zweiten Wände (11) sind.

6. Wärmetauscher nach Anspruch 5, wobei mindestens ein Teil (2, 3), bereitgestellt mit den die Wärme tauschende Oberfläche verbessernden Elementen (14), mindestens teilweise durch Extrusion hergestellt ist und wobei ein Teil der die Wärme tauschende Oberfläche verbessernden Elementen (14) von dem relevanten Teil (2, 3) nach dessen Extrusion entfernt wurde.

7. Wärmetauscher nach einem der vorhergehenden Ansprüche, wobei zwei Endteile (4, 5) an den zwei Teilen (2, 3) an gegenüberliegenden Seiten davon montiert sind, wobei die Endteile (4, 5) bevorzugt an die zwei Teile durch elastisches Bindemittel (55), bevorzugt einen elastischen Kleber, gebunden sind, um mindestens teilweise mindestens den Wärme tauschenden Raum (30) und/oder den Wasserkanal (24) zu verschließen und/oder wobei die Endteile (4, 5) bevorzugt mindestens teilweise durch Extrusion hergestellt sind.

8. Wärmetauscher nach einem der Ansprüche 1-7, wobei das Bindemittel (55) ein elastischer Kleber mit einem Gebrauchstemperaturbereich zwischen ungefähr -4 und +120°C, bevorzugt zwischen -20 und +150°C, bevorzugter zwischen ungefähr -40 und +170°C, noch bevorzugter zwischen mindestens -55 und 180°C oder höher ist und/oder wobei die Elastizität bevorzugt so ist, dass die Streckgrenze mehr als ungefähr 300 %, bevorzugt mehr als ungefähr 400 %, bevorzugter mehr als ungefähr 550 % und insbesondere bevorzugt mehr als 650 % ist.

9. Wärmetauscher nach einem der vorhergehenden Ansprüche, wobei das Bindemittel (55) ein Haftmittel auf Silikon- oder Elastomerbasis ist, bevorzugt härtend bei ungefähr Raumtemperatur an einer gummiähnlichen Komponente, die wasser- und gasdicht ist, wobei eine Bindeschicht, gebildet von dem Bindemittel, bevorzugt druckbeständig bis mindestens ungefähr 4 Bar ist, bevorzugter bis ungefähr 10 Bar und noch bevorzugter bis ungefähr 20 Bar oder darüber, wobei das Bindemittel bevorzugt auf einem nicht grundierten Metall der Teile angebracht wird.

10. Wärmetauscher nach einem der vorhergehenden Ansprüche, wobei der Brennerraum (31) mindestens an einer Seite, bevorzugt an einer Seite, die ihn mit dem Wärme tauschenden Raum (30), umfassend die Wärme tauschende Oberfläche verbessernde Elemente (14), verbindet, mit mindestens einer geneigten konvexen oder konkaven Oberfläche oder einer Reihe derartiger Oberflächen (17) versehen ist, was den Brennerraum (31) an der Seite begrenzt.

11. Wärmetauscher nach einem der vorhergehenden Ansprüche, wobei die zwei Teile (2, 3) einen ähnlichen und vorzugsweise im Wesentlichen identischen Querschnitt senkrecht zu einer Längsrichtung (X) haben.

12. Reihe von Wärmetauschern, jeder nach einem beliebigen der vorhergehenden Ansprüche, wobei mindestens zwei Wärmetauscher (1) in der Reihe im Wesentlichen identisch sind, abgesehen von einer Längsrichtung (X).

13. Verfahren zur Herstellung eines Wärmetauschers oder Teilen davon, wobei mindestens zwei Teile (2, 3) extrudiert sind, welche Teile im Wesentlichen unter Verwendung eines elastischen Bindemittels (55) oder Haftmittels aneinandergebunden sind, um mindestens einen Wärme tauschenden Raum (30) und/oder einen Wasser führenden Kanal (24) und einen Brennerraum (31) zu bilden, welches Bindemittel (55) oder Haftmittel eine wasser- und gasdichte Abdichtung bildet, wobei zwischen dem Extrudieren und Binden der Teile mindestens eines der Teile (2, 3) bearbeitet wird durch Entfernen von mindestens einem Teil der die Wärme tauschende Oberfläche verbessernden Elemente (14), integral extrudiert in den Teilen, um mindestens ein Teil des Brennerraums und des Wärme tauschenden Raums (30) zu bilden.

14. Verfahren nach Anspruch 13, wobei die Teile mit dem Klebstoff, der eine fluidumfeste Dichtung bildet, aneinandergeklebt sind.

15. Verfahren nach den Ansprüchen 13 oder 14, wobei zwei Endteile (4, 5) mindestens teilweise durch Extrusion hergestellt sind und bevorzugt durch ein elastisches Bindemittel (55) an den zwei Teilen (2, 3) befestigt sind, um dadurch einen Flüssigkeitsraum mindestens teilweise zu verschließen.

16. Verfahren nach einem der Ansprüche 13-15, wobei die zwei Teile (2, 3) und/oder Endteile (4, 5) jeweils versehen sind mit mindestens einer Bindeoberfläche (B), um aneinander und/oder an die Endteile (4, 5) gebunden zu werden, wobei mindestens eine der Bindeoberflächen (B) versehen ist mit Abstandselementen (52), welche Abstandselemente (52) eine im Wesentlichen gleiche Höhe über der Bindeoberfläche (B) haben, wobei ein Bindemittel (55) auf mindestens einer der Bindeoberflächen (B) bereitgestellt ist, zumindest um die Abstandselemente (52) herum, sodass, wenn die Bindeoberflächen (B) aneinandergebunden werden, eine der Bindeoberflächen (B) gegen die Abstandselemente (52) auf der anderen der Bindeoberflächen (B) gezwungen wird, um dadurch eine Schicht von Bindemittel (55) zwischen den zwei Bindeoberflächen (B) mit einer im Wesentlichen gleichen Dicke (t) zu bilden, wobei die Schicht bevorzugt die Abstandselemente mindestens im Wesentlichen umgibt.

17. Heizvorrichtung, umfassend einen Wärmetauscher nach einem der Ansprüche 1-11 oder hergestellt mit einem Verfahren nach einem der Ansprüche 13-16.

## Revendications

1. Echangeur de chaleur (1) comprenant au moins un espace d'échangeur de chaleur (30), un espace de brûleur (31) et un canal conducteur d'eau (24), dans lequel l'échangeur de chaleur (1) comprend au moins deux pièces (2, 3) fabriquées au moins en partie par extrusion à partir de métal léger ou d'un alliage de métal léger, lesdites au moins deux pièces (2, 3) venant en prise mutuellement pour former une partie de l'espace d'échange de chaleur (30) et/ou du canal conducteur d'eau (24), dans lequel chacune desdites au moins deux pièces (2, 3) comprend une partie dudit espace d'échange de chaleur (30) et/ou dudit canal conducteur d'eau (24) et dans lequel l'espace de brûleur (31) est formé dans une ou entre lesdites au moins deux pièces (2, 3), dans lequel lesdites au moins deux pièces (2, 3) sont reliées par un agent de liaison élastique (55), en particulier une colle élastique, formant une liaison et un joint, dans lequel au moins le canal conducteur d'eau (24) de l'échangeur de chaleur (1) est résistant à la pression, ledit échangeur de chaleur comprend en outre au moins une première partie d'extrémité (4) et une seconde partie d'extrémité (5), dans lequel les au moins deux pièces (2, 3) et parties d'extrémité (4, 5) sont pourvues de surfaces de liaison B, dans lequel sur au moins l'une desdites surfaces de liaison (B) sont prévus des éléments d'espacement liés mutuellement (52), lesquels élément d'espacement sont dimensionnés de sorte que lorsque lesdites surfaces de liaison (B) sont collées ensemble, l'une desdites surfaces de liaison (B) peut appuyer contre lesdits éléments d'espacement (52) sur l'autre desdites deux surfaces de liaison (B), en fournissant un espace entre lesdites deux surfaces de liaison (B) ayant une épaisseur sensiblement constante (t) entre lesdites surfaces de liaison (B) pour loger ledit agent de liaison élastique (55) dans une couche d'épaisseur sensiblement égale.

2. Echangeur de chaleur selon la revendication 1, dans lequel les éléments d'espacement (52) sont de préférence réalisés intégralement et/ou reliés de façon fixe avec ladite pièce (2, 3) ou partie d'extrémité (4, 5).

3. Echangeur de chaleur selon la revendication 1 ou 2, dans lequel ledit agent de liaison (55) entoure au moins un certain nombre desdits éléments d'espacement (52), au moins en partie.

4. Echangeur de chaleur selon l'une quelconque des revendications 1 à 3, dans lequel au moins l'une des deux pièces (2, 3) comporte une première paroi (10) et deux secondes parois (11), les secondes parois (11) s'étendant sous un angle différent de 180 degrés, à partir du même côté de la première paroi (10), les deux pièces (2, 3) étant reliées par l'agent de liaison (55) par au moins les secondes parois (11).

5. Echangeur de chaleur selon la revendication 4, dans lequel une série d'éléments (14) d'amélioration de surface d'échange de chaleur s'étendent depuis la première paroi (10), dans lequel les éléments (14) sont de préférence des nervures ayant une direction de longueur sensiblement parallèle à (X) des secondes parois (11).

6. Echangeur de chaleur selon la revendication 5, dans lequel au moins une pièce (2, 3) pourvue desdits éléments d'amélioration de surface d'échange de chaleur (14) est réalisée au moins en partie par extrusion et dans lequel une partie des éléments (14) d'amélioration de surface d'échange de chaleur a été retirée de la pièces concernée (2, 3) après leur extrusion.

7. Echangeur de chaleur selon l'une quelconque des revendications précédentes, dans lequel deux pièces d'extrémité (4, 5) sont montées sur les deux pièces (2, 3), sur des côtés opposés de celles-ci, dans lequel les pièces d'extrémité (4, 5) sont de préférence liées auxdites deux pièces par un liant élastique (55), de préférence une colle élastique, fermant au moins partiellement au moins l'espace d'échange de chaleur (30) et/ou le canal d'eau (24), et/ou dans lequel lesdites pièces d'extrémité (4, 5) sont de préférence réalisées au moins en partie par extrusion.

8. Echangeur de chaleur selon l'une quelconque des revendications 1 à 7, dans lequel l'agent de liaison (55) est une colle élastique ayant une plage de température d'utilisation comprise entre environ -4 et +120°C, de préférence entre environ -20 et +150°C, de manière plus préférée entre -40 et +170°C, de manière encore plus préférée entre -55 et 180°C ou plus, et/ou dans lequel l'élasticité est de préférence telle que la limite d'élasticité est supérieure à environ 300 %, de préférence supérieure à environ 400 %, de manière préférée supérieure à environ 550 % et de manière particulièrement préférée supérieure à 650 %.

9. Echangeur de chaleur selon l'une quelconque des revendications précédentes, dans lequel l'agent de liaison (55) est un adhésif à base de silicone ou d'élastomère, durcissant de préférence à environ la température ambiante jusqu'à un composant analogue à du caoutchouc qui est étanche aux gaz et à l'eau, dans lequel une couche de liaison formée par ledit agent de liaison est de préférence résistante à une pression d'au moins environ 4 Bars, de manière plus préférée d'environ 10 bars et de manière encore plus préférée d'environ 20 Bars ou plus, dans lequel l'agent de liaison est de préférence appliqué au métal non apprêté des pièces.

10. Echangeur de chaleur selon l'une quelconque des revendications précédentes, dans lequel l'espace de brûleur (31) est au moins d'un côté, de préférence au niveau d'un côté le reliant à l'espace d'échange de chaleur (30) comprenant des éléments (14) d'amélioration de surface d'échange de chaleur, pourvu d'au moins une surface inclinée, convexe ou concave ou d'une série de telles surfaces (17), en rétrécissant ledit espace de brûleur (31) au niveau dudit côté.

11. Echangeur de chaleur selon l'une quelconque des revendications précédentes, dans lequel les deux pièces (2, 3) ont une section transversale similaire et de préférence sensiblement identique, perpendiculaire à une direction de longueur (X).

12. Série d'échangeurs de chaleur, chacun selon l'une quelconque des revendications précédentes, dans laquelle au moins deux échangeurs de chaleur (1) de la série sont sensiblement identiques, à l'exception d'une direction de longueur (X).

13. Méthode de fabrication d'un échangeur de chaleur ou de parties de celui-ci, dans laquelle au moins deux pièces (2, 3) sont extrudées, lesquelles parties sont ensuite liées l'une à l'autre au moyen d'un agent de liaison élastique ou d'un adhésif pour former au moins un espace d'échange de chaleur (30) et/ou un canal conducteur d'eau (24) et un espace de brûleur (31), ledit agent de liaison (55) ou adhésif formant une étanchéité étanche à l'eau et aux gaz, dans laquelle entre l'extrusion et la liaison des parties, au moins une des pièces (2, 3) est usinée en enlevant au moins une partie des éléments (14) d'amélioration de surface d'échange de chaleur intégralement extrudés dans les pièces, pour former au moins une partie dudit espace brûleur et dudit espace d'échange de chaleur espace (30).

14. Méthode selon la revendication 13, dans laquelle les pièces sont collées ensemble, la colle formant un joint étanche au fluide.

15. Méthode selon les revendications 13 ou 14, dans laquelle deux pièces d'extrémité (4, 5) sont fabriquées au moins partiellement par extrusion et sont liées aux deux pièces (2, 3), de préférence par un agent de liaison élastique (55), en fermant ainsi un espace de fluide au moins en partie.

16. Méthode selon l'une quelconque des revendications 13 à 15, dans laquelle lesdites deux pièces (2, 3) et/ou pièces d'extrémité (4, 5) sont pourvues chacune d'au moins une surface de liaison (B), pour être liées ensemble et/ou à des pièces d'extrémité (4, 5), dans laquelle au moins une desdites surfaces de liaison (B) est pourvue d'éléments d'espacement (52), lesdits éléments d'espacement (52) ayant une hauteur sensiblement égale au-dessus de ladite surface de liaison (B), dans laquelle un agent de liaison (55) est prévu sur au moins l'une desdites surfaces de liaison (B), au moins autour desdits éléments d'espacement (52), de sorte que lorsque les surfaces de liaison (B) sont liées ensemble, l'une desdites surfaces de liaison (B) est forcée contre lesdits éléments d'espacement (52) sur l'autre desdites surfaces de liaison (B), en formant ainsi une couche d'agent de liaison (55) entre lesdites deux surfaces de liaison (B) ayant une épaisseur sensiblement uniforme (t), dans laquelle la couche entoure de préférence au moins sensiblement les éléments d'espacement.

17. Appareil de chauffage comprenant un échangeur de chaleur selon l'une quelconque des revendications 1 à 11 ou fabriqué avec une méthode selon l'une des revendications 13 à 16.
